(19) **Europäisches Patentamt**

**European Patent Office**

**Office européen des brevets**

(11) **EP 2 082 294 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **07821535.7**

(22) Anmeldetag: **18.10.2007**

(51) Int Cl.:
***G05B 19/00*** *(2006.01)*   ***G05B 13/04*** *(2006.01)*

(86) Internationale Anmeldenummer:
**PCT/EP2007/061170**

(87) Internationale Veröffentlichungsnummer:
**WO 2008/046894 (24.04.2008 Gazette 2008/17)**

(54) **VERFAHREN UND VORRICHTUNG ZUR IDENTIFIKATION EINER VERZÖGERUNGSBEHAFTETEN REGELSTRECKE, REGELEINRICHTUNG UND COMPUTERPROGRAMMPRODUKT**

METHOD AND DEVICE FOR THE IDENTIFICATION OF A DELAY-SUSCEPTIBLE CONTROL PATH, CONTROL DEVICE, AND COMPUTER PROGRAM PRODUCT

PROCÉDÉ ET DISPOSITIF POUR L'IDENTIFICATION D'UNE CONDUITE ASSERVIE À RETARDEMENT, DISPOSITIF DE RÉGLAGE ET PRODUIT LOGICIEL INFORMATIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.10.2006   DE 102006049124**

(43) Veröffentlichungstag der Anmeldung:
**29.07.2009   Patentblatt 2009/31**

(73) Patentinhaber: **SIEMENS AKTIENGESELLSCHAFT**
**80333 München (DE)**

(72) Erfinder:
• **AUGENSTEIN, Lutz**
**75249 Kieselbronn (DE)**
• **LAMB, Bernd**
**76337 Waldbronn (DE)**
• **PFEIFFER, Bernd-Markus**
**76744 Wörth (DE)**
• **WENDELBERGER, Klaus-Walter**
**68789 St. Leon-Rot (DE)**

(56) Entgegenhaltungen:
**EP-A- 1 001 320     EP-A- 1 267 229**
**WO-A- 00/02103     DE-C1- 19 828 446**

**Beschreibung**

Die Erfindung betrifft ein Verfahren zur Identifikation einer verzögerungsbehafteten Regelstrecke bei der Regelung eines Dampferzeugers sowie eine zur Durchführung des Verfahrens ausgebildete Vorrichtung. Die Erfindung betrifft ferner eine Regeleinrichtung sowie ein Computerprogrammprodukt.

Die Regelgüte einer modellbasierten Regelung hängt davon ab, wie gut das dynamische Verhalten eines realen Prozesses durch das Modell abgebildet wird. Im Falle eines Dampferzeugers mit Turbine in einem Kohlekraftwerk ist das dynamische Verhalten des Gesamtsystems wegen des nichtlinearen Verhaltens verschiedener Aggregate wie z.B. Kohlemühlen, Frischlüfter, Saugzüge usw. sowie insbesondere durch die schwankende Rohstoffqualität der Kohle zeitvariant. Weiterhin ändert sich die Prozessdynamik über die Zeit als Folge von Verschmutzungen und Verschleiß.

Zur Regelung solcher zeitvarianter Prozesse wurde bisher häufig das dynamische Verhalten des Prozesses nur dahingehend berücksichtigt, dass ausgehend von einem zeitinvarianten Modell in umfangreichen Versuchsreihen Abhängigkeiten der Prozessdynamik von den Haupteinflussgrößen ermittelt wurden. Diese Informationen wurden in entsprechenden Kennlinien hinterlegt, die wiederum in den Regelprozess mit einbezogen wurden. Der langsamen Varianz der Dynamik über die Zeit durch Verschmutzung oder Verschleiß musste oftmals in einem aufwändigen Vorort-Service-Einsatz dadurch begegnet werden, dass die Regelung in bestimmten Zeitabständen immer wieder neu eingestellt wurde. Die Regelgüte ist dabei stets durch die Ungenauigkeit des Modells begrenzt.

Ein weiterer Ansatz, um zeitvariante Prozesse besser regeln zu können, besteht darin, das Modell an die aktuellen Verhältnisse im Prozess anzupassen. Bei einer adaptiven Regelung wird das durch die schwankenden Streckenparameter verursachte, veränderliche Systemverhalten zunächst in geeigneter Weise erfasst und mit Hilfe der so gewonnenen Information eine Verstellung der Reglerparameter vorgenommen. Bei den so genannten "Self-Tuninig" Adaptionsverfahren werden die schwankenden Parameter aus der Messung von Ein- und Ausgangsgröße der Strecke ermittelt. Eine solche Bestimmung von Systemparametern aus zeitveränderlichen Größen des Systems wird als Identifikation bezeichnet. {Dokument DE 19828446 C1 beschreibt eine bekannte Vorgehensweise nach dem Stand der Technik}

Es ist Aufgabe der Erfindung, ein Verfahren zur Identifikation einer verzögerungsbehafteten Regelstrecke anzugeben, so dass eine verbesserte Regelgüte bei der Regelung eines Dampferzeugers erzielt wird. Es ist ferner Aufgabe der vorliegenden Erfindung, eine entsprechende Vorrichtung anzugeben, welche die Durchführung des erfindungsgemäßen Verfahrens ermöglicht. Eine weitere Aufgabe der Erfindung besteht darin, eine Regeleinrichtung anzugeben, welche das Ergebnis der Identifikation der Regelstrecke verwendet. Es soll ferner ein Computerprogrammprodukt angegeben werden.

Diese Aufgaben werden durch die Merkmale der unabhängigen Patentansprüche gelöst. Vorteilhafte Ausgestaltungen sind jeweils in den abhängigen Patentansprüchen wiedergegeben.

Die Erfindung ermöglicht vorteilhaft eine Online-Identifikation für das dynamische Prozessmodell eines Dampferzeugers. Dabei wird eine Modellstruktur des Dampferzeugers bestehend aus einem zeitvarianten Verzögerungsglied N-ter Ordnung und einem Integrator vorgegeben. Als Messwerte werden der Brennstoffmassenstrom, der dem Dampferzeuger zugeführt wird, der Turbinendampfmassenstrom, der am Ausgang des Dampferzeugers entnommen wird und der Frischdampfdruck, der sich im Dampfspeicher hinter dem Dampferzeuger nach Entnahme des Turbinendampfmassenstroms einstellt, verwendet. Mittels dieser online aufgenommenen Messwerte wird der Frischdampfmassenstrom am Ausgang des Dampferzeugers berechnet, da dieser nicht zugänglich und damit auch nicht messbar ist. Auf diese Weise sind die Eingangsgröße des Verzögerungsglieds N-ter Ordnung und die Ausgangsgröße desselben bestimmt, so dass mittels eines Schätzverfahrens die Parameter einer kontinuierlichen Übertragungsfunktion des Verzögerungsglieds N-ter Ordnung ebenfalls online ermittelt werden. Die geschätzten Parameter werden anschließend in die Zeitkonstanten eines Verzögerungsgliedes mit N unabhängigen Zeitkonstanten umgerechnet. In einem nächsten Schritt werden durch Vergleich der N Zeitkonstanten Bereiche in den Zeitverläufen der einzelnen Zeitkonstanten bestimmt, in denen die Zeitkonstanten annähernd gleich sind. Innerhalb dieser Bereiche werden aus den N unabhängigen Zeitkonstanten die Zeitkonstanten eines Verzögerungsgliedes N-ter Ordnung mit gleichen Zeitkonstanten für das Verzögerungsglied der vorgegebenen Modellstruktur ermittelt. Ist die Zeitkonstante des Verzögerungsglieds bestimmt, so ist auch das gesamte dynamische Modell des Dampferzeugers identifiziert.

Mit dem erfindungsgemäßen Ansatz lassen sich zeitvariante Parameter einer kontinuierlichen Übertragungsfunktion aus abgetasteten Messdaten identifizieren. Damit ist eine permanente Adaption des Prozessmodells an das Verhalten der realen Anlage möglich. Das adaptierte Modell ist eine Grundlage für eine adaptive Regelung, die einem Kraftwerksbetreiber eine höhere Regelgüte insbesondere bei Veränderungen der Rohstoffqualität und bei Lastwechseln bietet, und dazu beiträgt, Energieverbrauch, Umweltbelastungen und Verschleiß an der Anlage zu reduzieren. Ein besonderer Vorteil der Erfindung liegt darin, dass durch die permanente Überwachung und online-Durchführung der Parameterschätzung bei mangelnder Anregung die Ausgabe irrelevanter Schätzergebnisse an die überlagerte Regelung vermieden wird.

In einer Ausführungsvariante der Erfindung wird der Brennstoffmassenstrom vorteilhaft mit einem Verstärkungsfaktor multipliziert, der sich aus dem Heizwert des Brennstoffs und dem Wirkungsgrad der Dampferzeugung zusammensetzt. Dies bedeutet eine verbesserte Abbildung des dynamischen Modells der Dampferzeugung auf den Realprozess, und damit eine zusätzliche Verbesserung der Regelgüte.

In einer weiteren Ausführungsvariante der Erfindung werden die Messwerte mit Wichtungsfaktoren multipliziert, wobei die Wichtungsfaktoren für Messwerte, die zeitlich weiter zurückliegen, kleiner sind als die Wichtungsfaktoren aktueller Messwerte. Dazu wird beispielsweise ein Vergessensfaktor in die Berechnungen eingeführt. Störungen aufgrund von weiter zurückliegenden Messdaten werden auf diese Weise vorteilhaft vermieden und somit eine höhere Genauigkeit des erfindungsgemäßen Verfahrens erzielt.

Die Erfindung wird nachfolgend anhand eines in den Zeichnungen dargestellten Ausführungsbeispiels näher erläutert. Dabei zeigen:

Fig. 1 ein Blockschaltbild einer Regelstrecke für Dampfer- zeuger und Turbine

Fig. 2 eine Gegenüberstellung der online-Verläufe von Messdaten des Brennstoffmassenstroms, des berechne- ten Frischdampfmassenstroms und ein Beispiel für die geschätzen Parameter für ein Verzögerungsglied dritter Ordnung

Fig. 3 eine schematische Darstellung der Regeleinrichtung

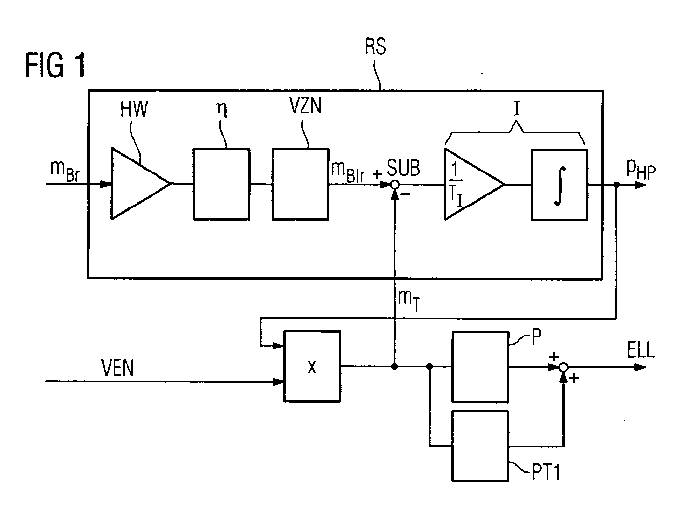

Anhand von Fig. 1 wird das regelungstechnische Strukturmodell RS des Dampferzeugers verdeutlicht. Die zeitveränderlichen Größen sowie Funktionalbeziehungen sind durch geeignete graphische Symbole veranschaulicht und zu einem Strukturbild zusammengefügt.

Als Eingangsgröße wird dem Dampferzeuger, der in der Zeichnung durch die Regelstrecke RS repräsentiert ist, der Brennstoffmassenstrom mBr zugeführt. Zur Dampferzeugung wird zum Beispiel in Kohlemühlen zu Kohlestaub gemahlene Kohle verbrannt, wodurch oberhalb des Brenners in Rohren geführtes Speisewasser zu Dampf erhitzt wird. Der unterschiedliche Heizwert der Kohle wird im Strukturmodell RS durch ein Verstärkungsglied HW berücksichtigt. Außerdem besitzt jede Verbrennung und damit auch die Dampferzeugung einen unterschiedlichen Wirkungsgrad, was in Fig. 1 als eigener Block η dargestellt ist. Diese Faktoren, die überwiegend die Kohlequalität betreffen, sind aus regelungstechnischer Sicht als Faktoren zu berücksichtigen, mit denen die Eingangsgröße des Brennstoffmassenstroms mBr multipliziert wird.

Das dynamische Verhalten von Kohlemühle, Verbrennung und Dampferzeugung wird in diesem Ausführungsbeispiel näherungsweise durch ein zeitinvariantes Verzögerungsglied N-ter Ordnung VZN modelliert. Wie bereits ausgeführt, ist das dynamische Verhalten des Dampferzeugers wegen der schwankenden Rohstoffqualität zeitvariant.

Am Ausgang des Verzögerungsglieds VZN wird ein Frischdampfmassenstrom mBlr abgeführt. Der Frischdampf wird anschließend einem Dampfspeicher oder Kessel zugeführt. Diesem wird ein Turbinendampfmassenstrom mT entnommen und zur Turbine geführt. Dazu ist ein Subtraktionsglied SUB in Fig. 1 eingezeichnet. Die aufintegrierte Differenz zwischen den beiden Massenströmen mBlr und mT ist proportional zum Dampfdruck pHP im Dampfspeicher, und dieser ist im Gegensatz zum Frischdampfmassenstrom mBlr eine messbare Größe. In dem hier vorgegebenen Strukturmodell RS ist zur Durchführung der Integration ein Integrator I dargestellt. Dieser wird als zeitinvariant vorausgesetzt. Die Integrations-Zeitkonstante TI des Dampfkessels wird als bekannt vorausgesetzt.

Das Strom erzeugende Teilsystem ist nicht Teil der Regelstrecke RS und ist hier nur als Ergänzung dargestellt. Es umfasst Generator und Turbine. Stellgröße ist die Ventilstellung VEN des Turbineneingangsventils, über welche der Dampffluss zur Turbine gesteuert wird. Turbine und Generator sind durch die Parallelschaltung eines P und PT1-Gliedes modelliert, da ein Teil des Frischdampfes direkt vom Hochdruckbereich der Turbine zum Generator gelangt und ein weiterer Teil des Dampfes hinter dem Hochdruckbereich der Turbine wieder dem Dampfkessel zugeführt wird. Das PT1-Glied stellt demnach den Kreislauf im Zusammenhang mit dem Zwischenkreisüberhitzer dar.

Das Dampf erzeugende und das Strom erzeugende Teilsystem sind über den Turbinendampfmassenstrom mT und den Dampfdruck pHP gekoppelt. Eine Erhöhung des Turbinendampfmassenstroms durch das Öffnen des Ventils VEN führt zunächst zu einer Verringerung des Dampfdrucks. Dies senkt wiederum den Turbinendampfmassenstrom und erhöht damit wieder den Dampfdruck pHP. Weiterhin gilt grundsätzlich, dass der Turbinendampf-Massenstrom mT proportional zur erzeugten elektrischen Leistung ELL ist und sich aus dieser rechnerisch bestimmen lässt.

Auf der Basis des anhand von Fig. 1 beschriebenen Streckenmodells RS für den Dampferzeuger wird nun die Vorgehensweise bei der Online-Identifikation des Dampferzeugers verdeutlicht.

Grundsätzlich bedeutet die Identifikation der Regelstrecke des Dampferzeugers die Bestimmung des Übertragungsverhaltens des unbekannten Verzögerungsgliedes VZN, welches das dynamische Verhalten des Dampferzeugers repräsentiert. Ist die Übertragungsfunktion und die Zeitkonstante des Verzögerungsgliedes bestimmt, so ist der Prozess identifiziert. Zur Identifikation der Parameter der Übertragungsfunktion des Verzögerungsgliedes wird ein Schätzverfahren verwendet. Gleichzeitig soll eine permanente Überwachung der Parameterschätzung stattfinden, um die Ausgabe fehlerhafter Schätzergebnisse an die überlagerte Regelung zu verhindern.

Basis der erfindungsgemäßen Online-Identifikation sind demnach neben der vorgegebenen Modellstruktur in konstanten Zeitschritten abgetastete Messwerte des Brennstoffmassenstroms mBr, des Turbinendampfmassenstroms mT und des Frischdampfdrucks pHP. Auf diese Weise wird eine Identifikation in Echtzeit erreicht.

Um die Übertragungsfunktion des Verzögerungsgliedes zu bestimmen, müssen in einem nächsten Schritt die Eingangs- und Ausgangsgrößen des Verzögerungsgliedes VZN bestimmt werden. Eingangsgröße ist der Brennstoffmassenstrom mBr. Ausgangsgröße ist der Frischdampfmassenstrom mBlr. Der Frischdampfmassenstrom mBlr lässt sich jedoch in der Regel messtechnisch schwer bestimmen. Daher wird dieser rechnerisch rekonstruiert. Der Frischdampfmassenstrom mBlr wird bei bekannter Integrations-Zeitkonstante TI des Dampfkessels aus den messbaren Größen des Frischdampfdrucks pHP und des Turbinendampfmassenstroms mT in folgender Weise berechnet (wobei TA die Abtastzeit und k ein Laufparameter für die Abtastung darstellt):

$$\dot{m}_{Blr}(k+1) = \dot{m}_T(k+1) + T_I \frac{p_{HP}(k+1) - p_{HP}(k)}{T_A}$$

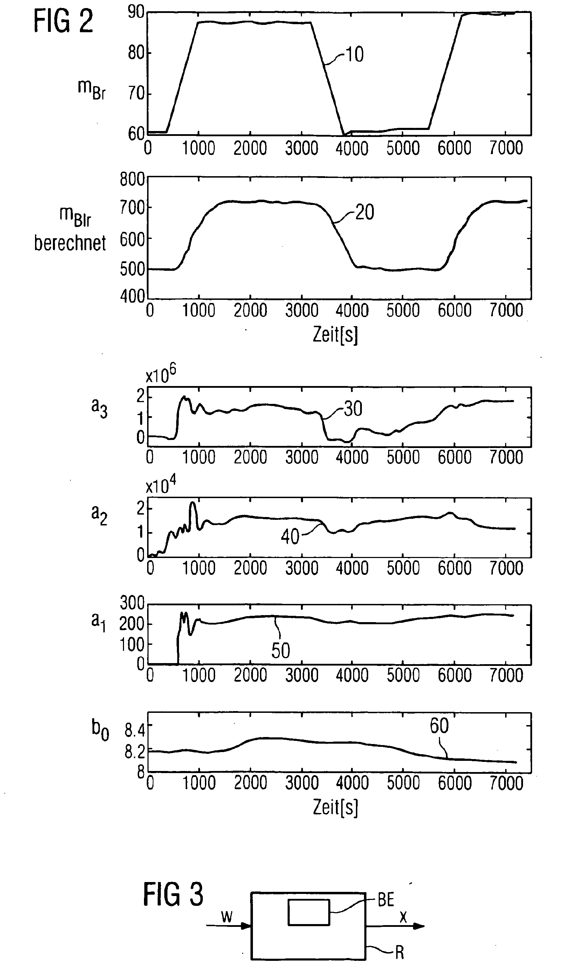

In Fig. 2 sind beispielhaft die Zeitverläufe für die messbare Eingangsgröße des Brennstoffmassenstroms mBr im Verlauf 10 und der berechneten Ausgangsgröße mBlr in Kurve 20 dargestellt. Die Messwerte wurden hierbei im 5s Raster aufgezeichnet. Mit einer Integrations-Zeitkonstante des Dampfkessels von 85 s wurde der fiktive Frischdampfmassenstrom mBlr berechnet, welcher die Ausgangsgröße des Dampferzeugers darstellt.

Im Folgenden wird das Verzögerungsglied N-ter Ordnung VZN beispielhaft als PT3-Glied angenommen.

Ziel ist es, in diesem Schritt die kontinuierliche Übertragungsfunktion des PT3-Glieds

$$G(s) = \frac{y(s)}{u(s)} = \frac{K}{(1+T_1 s)(1+T_2 s)(1+T_3 s)} = \frac{b_0}{1 + a_1 s + a_2 s^2 + a_3 s^3}$$

zu bestimmen.

In der Formel bedeuten

G(s) die Laplace-transformierte Übertragungsfunktion des PT3-Glieds (auch als s-Übertragungsfunktion bezeichnet)
y(s) das Prozessausgangssignal
u(s) das Prozesseingangssignal
T1,T2,T3 sind die einzelnen unabhängigen Zeitkonstanten
a1, a2, a3 und b0 die Prozessparameter, die mittels eines Schätzverfahrens bestimmt werden.

In diesem Ausführungsbeispiel wird eine rekursive Least-Squares Parameterschätzung mit einem diskreten WurzelfilterVerfahren in Informationsform verwendet. Gleichzeitig findet eine exponentiell abnehmende Gewichtung zeitlich zurückliegender Messdaten mittels Vergessensfaktoren statt. Die dazu notwendigen, nicht messbaren Ableitungen der Eingangs- und Ausgangsgrößen werden mit Hilfe eines Zustandsvariablenfilters ermittelt.

In Fig. 2 sind die aus realen Messdaten der Kurven 10 und 20 online geschätzten Parameter der s-Übertragungsfunktion beispielhaft dargestellt. Die Kurvenverläufe 30, 40, 50 und 60 stellen hierbei die zeitliche Entwicklung der entsprechenden Parameter a3, a2, a1 und b0 dar. Es wurde das rekursive diskrete Wurzelfilter-Verfahren in Informationsform mit einem Vergessensfaktor von 0,995 verwendet. Für den Zustandsvariablenfilter wurde hierbei eine Zeitkonstante von 80s gewählt, um hochfrequentes Rauschen in den Brennstoff- und Frischdampfmassenstromdaten wirksam zu unterdrücken.

Grundsätzlich können zur Durchführung der Parameterschätzung auch andere bekannte Schätzverfahren wie die Prediction Error Method oder andere Wurzelfilterverfahren verwendet werden.

Im Folgenden ist ferner zu beachten, dass in diesem Ausführungsbeispiel das dynamische Verhalten des Dampferzeugers und Kessels als Hintereinanderschaltung von drei Verzögerungsgliedern erster Ordnung mit gleichen Zeitkonstanten beschrieben wird, obwohl es bei einer realen Strecke nie drei genau gleiche Zeitkonstanten geben wird. Die Forderung nach drei gleichen Zeitkonstanten lässt sich jedoch nicht direkt erfüllen, da sämtliche rekursive Parameterschätzverfahren nur die Parameter (Polynom-Koeffizienten) einer Übertragungsfunktion, aber keine Zeitkonstanten schätzen. Dennoch können die Zeitkonstante des PT3 Glieds im Anschluss an die Parameterschätzung aus den geschätzten unabhängigen Zeitkonstanten ermittelt werden.

Nach erfolgreicher Schätzung der diskreten Parameter a1, a2, a3 und b0 sind diese noch auf die entsprechende zeitkontinuierliche Verstärkung und Zeitkonstanten umzurechnen.

Aus der o.a. Gleichung für die Übertragungsfunktion ergibt sich bei der Umrechnung in Zeitkonstanten ein nichtlineares Gleichungssystem der Form:

$$T_1 + T_2 + T_3 = a_1$$

$$T_1 T_2 + T_2 T_3 + T_1 T_3 = a_2$$

$$T_1 T_2 T_3 = a_3$$

Mit der vereinfachten Annahme von drei gleichen Zeitkonstanten T1=T2=T3=T lässt sich aus jedem der Parameter der Zahlenwert dieser dreifachen Zeitkonstante berechnen. Bei kleinen Differenzen zwischen den drei unabhängigen Zeitkonstanten T1, T2 und T3 ist die getroffene Annahme passend. Damit folgen drei Wege, dieselbe Zeitkonstante, nämlich die Zeitkonstante des gesuchten PT3-Glieds des Dampferzeugers, zu berechnen:

$$T(a_1) = \frac{a_1}{3}, T(a_2) = \sqrt{\frac{a_2}{3}}, T(a_3) = \sqrt[3]{a_3}$$

Anhand dieser Werte kann nun die Relevanz der Schätzergebnisse bestimmt werden.

Zu beachten ist weiterhin, dass es sich um eine Online-Identifikation handelt und der rekursive Schätzer zu jeder Zeit aktiv sein soll, um die Systemparameter zu identifizieren. Bei mangelnder Anregung oder zu großen Störungen liefert der Schätzer jedoch keine sinnvollen Schätzparameter und damit auch keine sinnvollen Zeitkonstanten. Daher ist eine Überwachungsebene notwendig, welche die gelieferten Schätzergebnisse auf Plausibilität prüft und über deren Gültigkeit entscheidet. Hierfür werden verschiedene Testkriterien aufgestellt. Nur wenn alle Kriterien zur gleichen Zeit erfüllt sind, wird die aktuelle berechnete mittlere Summen-Zeitkonstante akzeptiert und ausgegeben.

Als Kriterien werden beispielsweise sinnvolle IntervallGrenzen angegeben, d.h. es wird eine untere Grenze Tmin und eine obere Grenze Tmax eines Intervalls angegeben, innerhalb der sich die gesuchte mittlere Zeitkonstante des Dampferzeugers befinden darf.

Weiterhin kann das Gradienten-Verhalten überprüft werden und ein so genanntes Prädiktionsfehler-Kriterium angewandt werden. In der Überwachungsebene wird somit die Tatsache genutzt, dass drei unabhängige Zeitkonstanten für eine gesuchte Zeitkonstante des Verzögerungsgliedes PT3 vorliegen.

Rein grafisch stellt sich dieser Schritt derart dar, dass die Kurvenverläufe der drei Zeitkonstanten T1, T2, T3 verglichen und mittels der o.a. Kriterien überprüft werden und dass auf diese Weise Bereiche der Kurvenverläufe bestimmt werden, in denen die Zeitkonstanten T1, T2, T3 annähernd gleich sind. Innerhalb dieser Bereiche können aus den drei unabhängigen Zeitkonstanten T1, T2, T3 die Zeitkonstante T eines Verzögerungsgliedes 3-ter Ordnung mit gleichen Zeitkonstanten für das Verzögerungsglied der vorgegebenen Modellstruktur ermittelt werden, wodurch hier im Falle des Dampferzeugers der gesamte Prozess identifiziert ist.

Das Ergebnis der Identifikation wird in Form eines zeitkontinuierlichen Modells an die überlagerte Regelung weitergegeben. Das adaptierte Modell ist somit Teil einer adaptiven Regelung des Dampferzeugers und der Turbine, wie in Fig. 3 verdeutlicht wird.

Fig. 3 zeigt das Strukturbild einer Regeleinrichtung R. Der Regeleinrichtung wird die Führungsgröße w zugeführt. Am Ausgang der Regeleinrichtung wird die Regelgröße x ausgegeben. Teil der Regeleinrichtung ist eine oder mehrere Berechnungseinheiten BE, in denen die Identifikation der Regelstrecke für die Regelung des Dampferzeugers online gemäß des erfindungsgemäßen Verfahrens berechnet wird.

**Patentansprüche**

1. Verfahren zur Identifikation einer verzögerungsbehafteten Regelstrecke bei der Regelung eines Dampferzeugers, mit den Schritten

- dass für den Dampferzeuger eine regelungstechnische Modellstruktur (RS) vorgegeben wird, die derart ausgelegt ist, dass sie ein zeitvariantes Verzögerungsglied N-ter Ordnung (VZN) aufweist, zu welchem ein Brennstoffmassenstrom (mBr) als Eingangsgröße geführt wird und welches einen Frischdampfmassenstrom (mBlr) als Ausgangsgröße abgibt,

wobei hinter dem Verzögerungsglied (VZN) ein Subtraktionsglied (SUB) angeordnet ist, in welchem von dem Frischdampfmassenstrom (mBlr) ein Turbinendampfmassenstrom (mT) subtrahiert wird und anschließend die Differenz aus diesen Massenströmen (mBlr, mT) einem Integrator (I) zugeführt wird, dessen Ausgangsgröße einen Frischdampfdruck (pHP) repräsentiert,

- dass Messwerte des Brennstoffmassenstroms (mBr), des Frischdampfdrucks (pHP) und des Turbinendampfmassenstroms (mT) online ermittelt werden,

- dass anhand der Messwerte des Frischdampfdrucks (pHP) und des Turbinendampfmassenstroms (mT) unter Verwendung der Modellstruktur (RS) und unter Berücksichtigung einer vorgegebenen Zeitkonstante des Integrators (I) der Frischdampfmassenstrom (mBlr) zurückgerechnet wird,

- dass aus dem Messwert des Brennstoffmassenstroms (mBr) und des zurückgerechneten Frischdampfmassenstrom (mBlr) mittels eines Schätzverfahrens Parameter (a1, a2, a3, b0) einer kontinuierlichen Übertragungsfunktion (G(s)) des Verzögerungsgliedes (VZN) online ermittelt und in die Zeitkonstanten eines Verzögerungsgliedes (VZN) mit N unabhängigen Zeitkonstanten (T1, T2, T3) umgerechnet werden,

- dass während der Regelung des Dampferzeugers Zeitbereiche ermittelt werden, in denen die Zeitkonstanten (T1, T2, T3) annähernd gleich sind, und dass der Wert dieser Zeitkonstanten (T1, T2, T3) als der Wert der Zeitkonstanten des Verzögerungsglieds (VZN) identifiziert wird.

2. Verfahren nach Anspruch 1,
   nach dem das Verzögerungsglied N-ter Ordnung (VZN) ein zeitvariantes Verzögerungsglied dritter Ordnung (VZ3) ist.

3. Verfahren nach Anspruch 1 oder 2,
   nach dem der Brennstoffmassenstrom (mBr) mit einem Verstärkungsfaktor multipliziert wird.

4. Verfahren nach einem der Ansprüche 1 bis 3,
   nach dem der Integrator (I) zeitinvariant ausgestaltet ist.

5. Verfahren nach einem der vorherigen Ansprüche,
   nach dem die Messwerte mit Wichtungsfaktoren multipliziert werden, wobei die Wichtungsfaktoren für Messwerte, die zeitlich weiter zurückliegen, kleiner sind als die Wichtungsfaktoren aktueller Messwerte.

6. Verfahren nach einem der vorherigen Ansprüche,
   nach dem als Schätzverfahren um eine rekursive Least-Squares Parameterschätzung der kontinuierlichen Übertragungsfunktion mit einem diskreten Wurzelfilterverfahren in Informationsform verwendet wird.

7. Vorrichtung zur Identifikation einer verzögerungsbehafteten Regelstrecke bei der Regelung eines Dampferzeugers, aufweisend mindestens eine Berechnungseinheit zur Durchführung des Verfahrens nach einem der Ansprüche 1 bis 6.

8. Regeleinrichtung (R) für einen Dampferzeuger, die eine verzögerungsbehafteten Regelstrecke und eine Vorrichtung aufweist, die nach Anspruch 7 ausgebildet ist.

9. Computerprogrammprodukt, das in den Speicher eines Computers geladen wird und Softwarecodeabschnitte umfasst, mit denen die Schritte gemäß einem der Ansprüche 1 bis 6 ausgeführt werden, wenn das Produkt auf einem Computer läuft.

**Claims**

1. Method for identification of a delay-susceptible control path for the closed-loop control of a steam generator, with the following steps

   - that a control system model structure (RS) is prespecified for the steam generator, which is configured such that is has a time-variant Nth-order delay element (VZN) to which a fuel mass flow (mBr) is supplied as input variable and which outputs a live steam mass flow (mBlr) as output variable,

with a subtraction element (SUB) being arranged beyond the delay element (VZN), in which a turbine steam mass flow (mT) is subtracted from the live steam mass flow (mBlr) and subsequently the difference between the mass flows (mBlr, mT) is supplied to an integrator (I), the output variable of which represents a live steam pressure (pHP),

- that measured values of the fuel mass flow (mBr), of the live steam pressure (pHP) and of the turbine steam mass flow (mT) are determined online,

- that, on the basis of the measured values of the live steam pressure (pHP) and the turbine steam mass flow (mT), using the model structure (RS) and taking into account a predetermined time constant of the integrator (I), the live steam mass flow (mBlr) is calculated retrospectively,

- that, from the measured value of the fuel mass flow (mBr) and the retrospectively calculated live steam mass flow (mBlr), using an estimation procedure, parameters (al, a2, a3, b0) of a continuous transmission function (G(s)) of the delay element (VZN) are determined online and converted into the time constants of a delay element (VZN) with N independent time constants (T1, T2, T3),

- that, during the closed-loop control of the steam generator, time ranges are determined in which the time constants (T1, T2, T3) are approximately the same, and that the value of these time constants (T1, T2, T3) is identified as the value of the time constants of the delay element (VZN).

2. Method according to claim 1,
according to which the Nth-order delay element (VZN) is a third-order time-variant delay element (VZ3).

3. Method according to claim 1 or 2,
according to which the fuel mass flow (mBr) is multiplied by an amplification factor.

4. Method according to one of claims 1 to 3,
according to which the integrator (I) is designed as timeinvariant.

5. Method according to one of the previous claims,
according to which the measured values are multiplied by weighting factors, with the weighting factors for measured values lying further back in time being smaller than the weighting factors of current measured values.

6. Method according to one of the previous claims,
according to which a recursive least-squares parameter estimation of the continuous transmission function with a discrete root filter method in information form is used as the estimation method.

7. Facility for identifying a delay-susceptible control path for the closed-loop control of a steam generator, having at least one processing unit for executing the method according to one of claims 1 to 6.

8. Closed-loop control device (R) for a steam generator, having a delay-susceptible control path and a facility embodied in accordance with claim 7.

9. Computer program product which is loaded into the memory of a computer and comprises software code sections with which the steps according to one of claims 1 to 6 are carried out when the product runs on a computer.

**Revendications**

1. Procédé d'identification d'un système réglé asservi à retardement lors de la régulation d'un générateur de vapeur, comprenant les stades, dans lesquels

- on prescrit pour le générateur de vapeur une structure ( RS ) de modèle en technique de régulation, qui est conçue de manière à avoir un élément de retardement à variation en temps du N$^{ième}$ ordre ( VZN ), auquel est envoyé comme grandeur d'entrée un courant ( mBr ) massique de combustible et qui émet comme grandeur de sortie un courant ( mBlr ) massique de vapeur vive,

dans lequel derrière l'élément ( VZN ) à retardement est monté un élément ( SUB ) de soustraction, dans lequel un courant ( mT ) massique de vapeur de turbine est soustrait du courant ( mBlr ) massique de vapeur vive et ensuite la différence entre ces courants ( mBlr, mT ) massiques est envoyée à un intégrateur ( I ), dont la grandeur de sortie représente une pression ( pHP ) de vapeur vive,

- on détermine en ligne des valeurs de mesure du courant ( mBr ) massique du combustible, de la pression ( pHP ) de la vapeur vive et du courant ( mT ) massique de la vapeur de turbine,

- au moyen des valeurs de mesure de la pression ( pHP ) de la vapeur vive et du courant ( mT ) massique de la vapeur de la turbine et en utilisant la structure ( RS ) de modèle et en tenant compte d'une constante de temps prescrite de l'intégrateur ( I ), on recalcule le courant ( mBlr ) massique de la vapeur vive,

- à partir de la valeur de mesure du courant ( mBr ) massique du combustible et du courant ( mBlr ) massique de la vapeur vive, qui a été recalculée, et au moyen d'un procédé d'estimation, on détermine en ligne des paramètres ( a1, a2, a3, b0 ) d'une fonction ( G(s) ) de transfert continue de l'élément ( VZN ) à retardement et on les transforme par le calcul en les constantes de temps d'un élément ( VZN ) à retardement ayant N constantes ( T1, T2, T3 ) indépendantes,

- on détermine pendant la régulation du générateur de vapeur des plages de temps, dans lesquelles les constantes ( T1, T2, T3 ) de temps sont à peu près les mêmes, et on identifie la valeur de ces constantes ( T1, T2, T3 ) de temps comme étant la valeur des constantes de temps de l'élément ( VZN ) à retardement.

2. Procédé suivant la revendication 1,
   suivant lequel l'élément à retardement du N$^{\text{ième}}$ ordre ( VZN ) est un élément à retardement à variation dans le temps du troisième ordre ( VZ3 ).

3. Procédé suivant la revendication 1 ou 2,
   suivant lequel on multiplie le courant ( mBr ) massique du combustible par un facteur d'amplification.

4. Procédé suivant l'une des revendications 1 à 3,
   suivant lequel l'intégrateur ( I ) est conformé d'une manière invariante dans le temps.

5. Procédé suivant l'une des revendications précédentes, suivant lequel on multiplie les valeurs de mesure par des facteurs de pondération, les facteurs de pondération pour des valeurs de mesure antérieures sont plus petits que les facteurs de pondération de valeurs de mesure présentes.

6. Procédé suivant l'une des revendications précédentes, suivant lequel on utilise, comme procédé d'estimation, une estimation de paramètre récursive par les moindres carrés de la fonction de transfert continue par un procédé de filtrage de racine discret sous forme d'information.

7. Dispositif d'identification d'un système réglé asservi à retardement lors de la régulation d'un générateur de vapeur, comprenant au moins une unité de calcul pour effectuer le procédé suivant l'une des revendications 1 à 6.

8. Dispositif ( R ) de régulation d'un générateur de vapeur, qui a un système réglé asservi à retardement et un dispositif constitué suivant la revendication 7.

9. Produit de programme informatique, qui est chargé dans la mémoire d'un ordinateur et qui comprend des sections de code de logiciel, par lesquelles les stades suivant l'une des revendications 1 à 6 sont réalisés lorsque le produit passe sur un ordinateur.

FIG 1

FIG 2

FIG 3

**IN DER BESCHREIBUNG AUFGEFÜHRTE DOKUMENTE**

**In der Beschreibung aufgeführte Patentdokumente**

- DE 19828446 C1